# EUROPEAN PATENT APPLICATION

(11) **EP 1 130 532 A2**
(43) Date of publication of application: **05.09.2001**
(21) Application number: 01104322.1
(22) Date of filing: 22.02.2001
(51) Int. Cl.: G06K 7/00

(54) **Adaptive audible alert control in a data reader**

(30) Priority: 02.03.2000 US 517262
(71) Applicant: PSC Scanning, Inc., Eugene, Oregon 97402 (US)
(72) Inventor: Kelly, Brian M., Eugene, Oregon 97404 (US); Kortt, Robert F., Eugene, Oregon 97404 (US); Price, Garth I., Eugene, Oregon 97402 (US)
(74) Representative: Viering, Jentschura & Partner

(57) **Abstract**

A data reading device generates an audible alert signal that can be easily heard in the presence of ambient noise. It operates by determining characteristics of the ambient noise, (e.g., the volume or the power spectrum of the ambient noise), and generating an audible alert signal with characteristics (e.g., tone and volume) selected to make the alert signal easy to hear over the ambient noise.

## Description

### FIELD OF THE INVENTION

The field of the present invention relates to data readers that generate audible alert signals, including, for example, barcode readers.

### BACKGROUND OF THE INVENTION

Many conventional barcode readers (e.g., flying spot laser scanners and optical imaging readers) generate an audible read-verification alert signal (e.g. a beep) each time they successfully read and decode a target barcode. When the operator hears the alert signal, the operator knows that the barcode had been successfully read, and the operator proceeds to the next item.

To operate conventional barcode readers, operators typically move items bearing barcodes past a window on a stationary barcode reading system, or move a handheld reader past the item. After the system reads and decodes the barcode, the system generates an audible alert signal, which verifies that the bar code has been read and signals the operator to proceed to the next item. If the operator does not hear the alert signal, the operator realizes that the system was unable to read the barcode. The operator can then respond accordingly by trying to rescan the barcode. If the alert signal is not heard after numerous attempts (indicating that the system could not read a particular barcode), the operator will ordinarily enter data for the item manually.

The volume level of the read-verification alert signals used in many conventional barcode readers can be adjusted manually by the operator. When adjusted properly, the volume will be high when the system is being used in a noisy environment (so that the operator will be able to hear the alert signal over the noise) and will be low when the system is being used in a quiet environment (so as not to annoy the operator, customers, and bystanders). Theoretically, such manual adjustments to the alert signal volume require only a short interruption to the work being done, and the negative impact on productivity is relatively small.

However, in practice, many operators are unfamiliar with how to adjust the volume of the read-verification alert signal, or simply do not bother to adjust it. As a result, the reader may be operated with the volume set to a sub-optimum level. This situation can result in a significant loss of productivity, because when the volume is too high, the operator (and customers) may be annoyed; and because when the volume is too low, the operator may not hear an alert signal, and may waste time attempting to get the system to read the barcode. Worse still, if the operator misses a read-verification alert signal, the operator may rescan the item unnecessarily, in which case the customer could be charged twice for a single item, or an inventory count may be measured incorrectly.

Another drawback of manual adjustment is that it generally does not allow modification of the audible alert signal to take account of different noise environments. Barcode readers are operated in a wide variety of environments, each of which can have a different ambient noise environment. For example, low frequency noise may predominate in certain situations, and high frequency noise may predominate in other situations. When the frequency of the read-verification alert signal is similar to the frequency of the ambient noise, it can be particularly difficult to hear the alert signal without adjusting the volume to an annoyingly loud level.

The inventors have recognized a need for a data reader which generates a read verification alert signal having a self-adjusted volume level. The inventors have further recognized a need for such a reader wherein the audible signal self-adjusts in tone to account for different types of ambient background noise.

### SUMMARY OF THE INVENTION

The present invention provides in one aspect apparatus and methods for adapting audio characteristics (e.g., volume and/or tone) of audible alert signals in data readers to compensate for the characteristics of ambient noise encountered during operation of the data reader. The characteristics of the generated alert signal are preferably selected so that the alert signal will be easy to hear despite the presence of the ambient noise.

A number of exemplary embodiments are described herein for adjusting the audio characteristics of alert signals in data readers. In a preferred embodiment as described herein, the frequency content of the ambient noise is analyzed to find a frequency band that contains low noise. An alert signal is then generated, when needed, in that frequency band. Optionally, the volume of the alert signal is adjusted to compensate for the total noise and/or for the noise within the selected frequency band corresponding to the alert signal.

### BRIEF DESCRIPTION OF THE DRAWINGS

FIG. 1 is a block schematic diagram of a data reader with an alert signal that adapts to ambient sounds in accordance with a preferred embodiment as described herein.

FIG. 2A is a graph of noise power versus frequency in a first ambient environment.

FIG. 2B is a graph of noise power versus frequency in a second ambient environment.

FIG. 3 is a block schematic diagram of an ambient sound analyzer suitable for use in the FIG. 1 embodiment.

FIG. 4 is a block schematic diagram of an alert signal generator suitable for use in the FIG. 1 embodiment.

FIG. 5 is a block schematic diagram of a data reader with an alert signal that adapts to ambient sounds in accordance with another preferred embodiment as described herein.

### DETAILED DESCRIPTION OF THE PREFERRED EMBODIMENTS

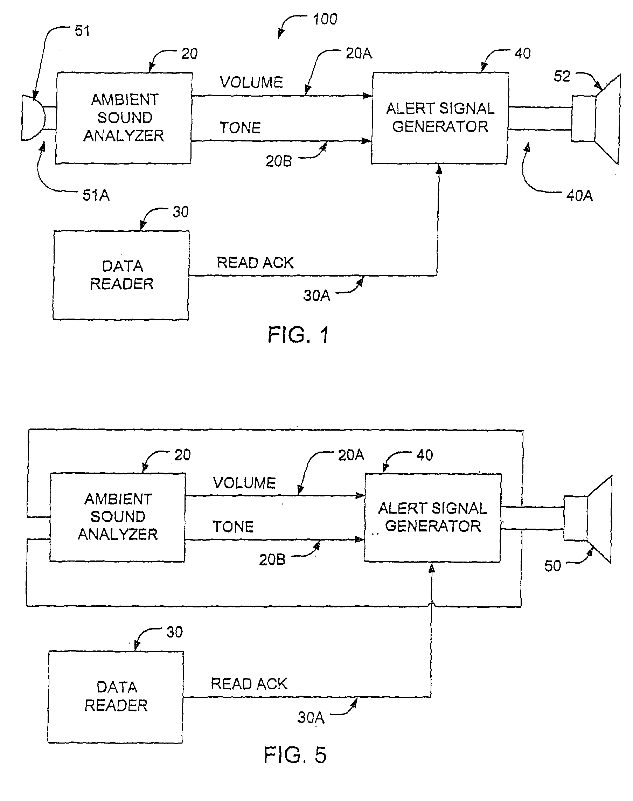

FIG. 1 is a block diagram of a preferred data reader 100 having an adaptable audible alert signal in accordance with one embodiment as described herein. The system shown in FIG. 1 includes a data reading subsystem 30 such as a barcode reader. While the data reading subsystem 30 will be referred to as a barcode reader hereafter, in accordance with a preferred embodiment, it will be understood that the principles illustrated in the system of FIG 1 will be applicable to other types of data readers as well. The data reading subsystem 30 may comprise, for example, a handheld or fixed-mount flying-spot laser barcode reader, a handheld or fixed-mount barcode reader with an optical imaging system (e.g., a CCD), or a handheld wand. An example of a conventional flying-spot optical scanner can be found in U.S. Patent No. 5,804,809, hereby incorporated by reference as if set forth fully herein. In alternative embodiments, other types of optical readers (e.g., readers that recognize alphanumeric characters, other symbols or indicia, or even the overall appearance of an object) may be used. The data reading subsystem 30 may also comprise a non-optical recognition system, such as a radio frequency identification system.

The data reader 100 further comprises a microphone 51, a speaker 52, an ambient sound analyzer 20, and an alert signal generator 40. The microphone 51 is connected to the ambient sound analyzer 20, and the speaker 52 is connected to the alert signal generator 40. The ambient sound analyzer 20 is connected to the alert signal generator 40 by a volume control signal 20A and a tone control signal 20B. The barcode reader 30 is connected to the alert signal generator by a read acknowledge signal 30A.

In operation, the barcode reader 30 reads a target barcode and subsequently asserts a READ ACK signal 30A, using any of a variety of techniques well known to those skilled in the art. The READ ACK signal 30A is provided to the alert signal generator 40. The ambient sound analyzer 20 outputs a volume control signal 20A and/or a tone control signal 20B which preferably takes account of the prevailing ambient noise environment, as explained in more detail below.

Returning now to FIG. 1, a microphone 51 is used to monitor ambient sounds. Preferably, the microphone 51 is positioned so that the noise monitored by the microphone will be substantially the same as, or at least similar to, the noise arriving at the operator's ears. The microphone 51 converts arriving sound waves (not shown) into an electrical microphone output signal 51A. The microphone output signal 51A is provided to the ambient sound analyzer 20.

The ambient sound analyzer 20 analyzes the signal 51A received from the microphone 51 to determine what types of ambient sound are present. Based on this determination, the ambient sound analyzer 20 generates a volume control signal 20A and/or a tone control signal 20B which are provided to the alert signal generator 40.

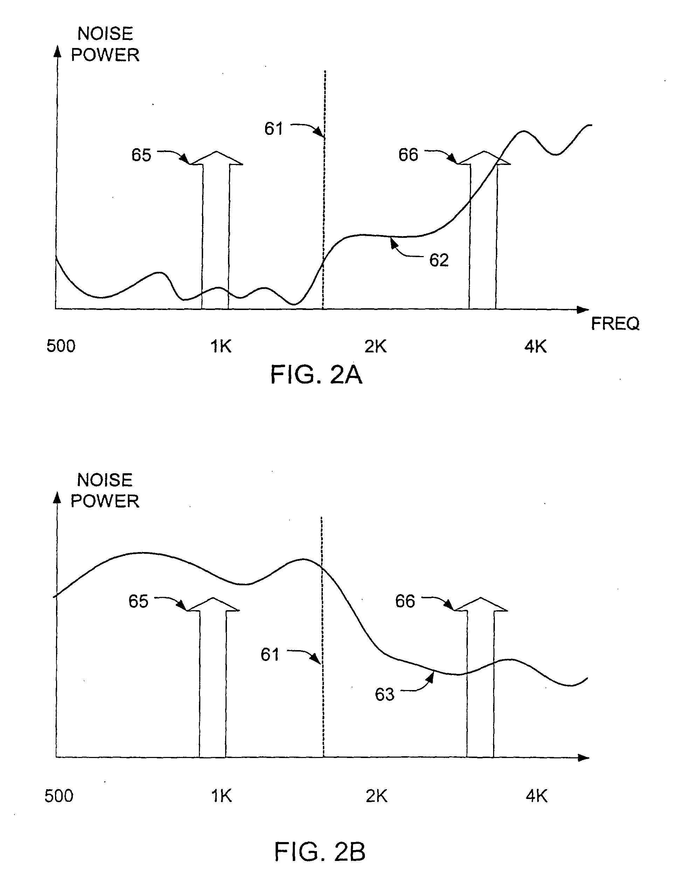

FIGS. 2A and 2B are examples of noise power spectra in first and second hypothetical ambient environments. In FIG. 2A, the noise power 62 is relatively low at frequencies below about 1.5 kHz, and higher at frequencies above 1.5 kHz. In this situation, it would be easier for an operator to hear a 1 kHz alert signal 65 than a 3 kHz alert signal 66. In FIG. 2B, the noise power 63 is relatively high below 1.5KHz, and moderate above 1.5KHz. In this situation, it would be easier for an operator to hear a 3 kHz alert signal 66 than a 1 kHz alert signal 65.

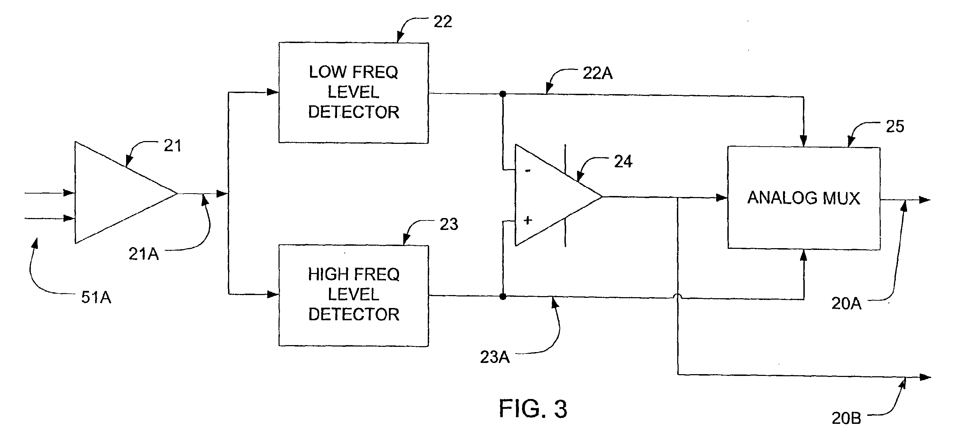

FIG. 3 is a block schematic diagram of a suitable circuit for use as the ambient sound analyzer 20 of FIG. 1. The microphone output signal 51A arriving from the microphone 51 (shown in FIG. 1) is amplified by the amplifier 21, and the amplified signal 21A is provided to both a low frequency level detector 22 and a high frequency level detector 23. The low frequency level and high frequency level detectors 22, 23 generate output signals having DC levels proportional to the power of the incoming signal 51A for low frequencies and high frequencies, respectively. The low frequency level detector 22 may operate, for example, by filtering the amplified signal 21A through a low pass filter with a suitable cutoff frequency (e.g., 1.5 kHz), rectifying the output of the filter, and performing envelope detection on the output of the rectifier, all in any conventional manner. The high frequency level detector 23 may be implemented in a similar manner by using a high pass filter with a suitable cutoff frequency (e.g., 1.5 kHz) instead of a low pass filter. Other cutoff frequencies may be used instead of the 1.5 kHz used in this example. Preferably, the cutoff frequency for the low pass filter used in the low frequency level detector 22 is approximately the same as the cutoff frequency for the high pass filter used in the high frequency level detector 23, so that two mutually exclusive frequency zones are defined.

The DC levels of the signals 22A, 23A output from the low frequency and high frequency level detectors 22, 23, respectively, are provided to the inputs of a comparator 24 and to signal inputs of an analog multiplexor 25. When the high frequency noise power is larger than the low frequency noise power (e.g., as illustrated in FIG. 2A), the DC level of signal 23A generated by the high frequency level detectors 23 will be larger than the DC level of the signal 22A generated by the low frequency level detector 22. This situation will cause the positive input of the comparator 24 to exceed the negative input of the comparator, and the output 20B of the comparator 24 will switch to a high state. When the low frequency noise power is larger than the high frequency noise power (e.g., as illustrated in FIG. 2B), the DC level of the signal 23A generated by the high frequency level detector 23 will be smaller than the DC level of the signal 22A generated by the low frequency level detector 22. This situation will cause the negative input of the comparator 24 to exceed the positive input of the comparator, and the output 20B of the comparator 24 will switch to a low state.

The output signal 20B from the comparator 24 is provided to the alert signal generator 40 (shown in FIG. 1) as a tone control signal. The comparator output signal 20B is also used to switch the analog multiplexor 25, so that its output will track the smaller of the two signals 22A, 22B. The tracking signal 20B output from analog multiplexor 25 is provided to the alert signal generator 40 as the volume control signal 20A (See FIG. 1). In this embodiment, the volume control signal 20A will generally be proportional to the noise power in the frequency band where the ambient noise is at a minimum. The alert signal generator 40 uses the volume control signal 20A to generate an alert signal in this frequency band in which ambient power is at a minimum, at a volume that can be heard over the noise in that band. In alternative embodiments, the volume control signal may be based on the total ambient noise power, or on some combination of (1) the total ambient noise power and (2) the noise power in the frequency band where the ambient noise is a minimum.

Numerous alternative approaches for generating the volume control 20A and the tone control 20B provided to the alert signal generator 40 are possible, and will be apparent to those skilled in the art. For example, by making suitable changes to the device illustrated in FIG. 3 (e.g., by adding one or more additional band pass filters to further separate the relevant frequency spectrum), the ambient noise power spectra may be divided into more than two bands, and the frequency band with the lowest noise power may then be selected and used as the band in which the audible alert signal will be generated. Alternatively, a suitably programmed microprocessor or digital signal processor may be used to analyze the frequency spectrum and locate a frequency or a band of frequencies that contains low levels of ambient noise, and to report the located frequency or band, using signal processing techniques well known to those skilled in the art. Any of these approaches may also be modified to provide an analog tone output or multi-bit digital tone output instead of the above-described single bit digital tone output 20B.

Returning now to FIG. 1, the volume control signal 20A and the tone control signal 20B generated by the ambient sound analyzer 20 are provided to the alert signal generator 40 to control the sound of the alert signal. When the alert signal generator 40 receives the READ ACK signal 30A from the barcode reader 30, which normally would occur upon the reading of a target barcode or symbol, the alert signal generator generates a driving signal 40A with amplitude and frequency characteristics that are controlled by the volume control signal 20A and the tone control signal 20B. The driving signal 40A generated by the alert signal generator 40 is provided to a speaker 52, which converts the driving signal 40A into an audible sound that can be easily heard in the presence of the detected ambient noise.

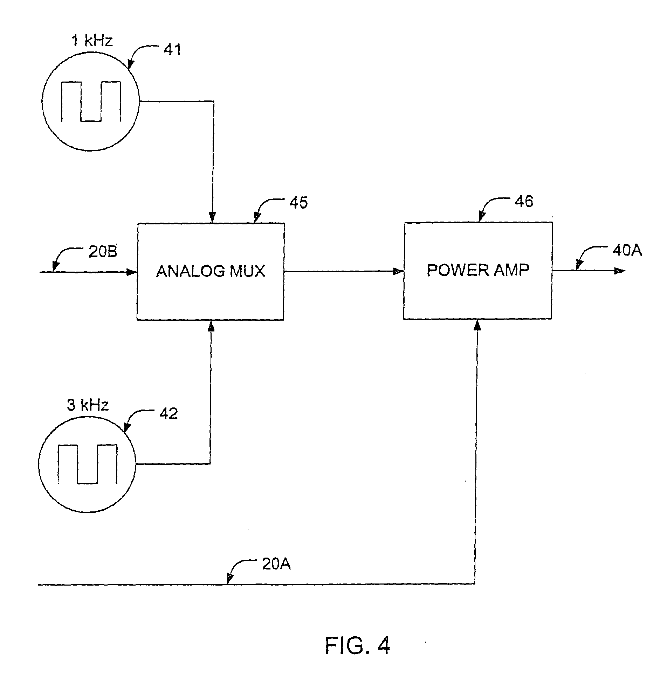

FIG. 4 shows details of an alert signal generator 40 that is suited for use in conjunction with the circuit illustrated in FIG. 3. Two oscillators 41, 42 generate tone signals (at, e.g., 1 kHz and 3 kHz), and a multiplexor 45 selects the output from one of the oscillators 41, 42. When the tone control signal 20B from the ambient sound analyzer 20 is low (indicating noise with predominantly low-frequency components), the high frequency oscillator 42 is selected. In contrast, when the tone control signal 20B from the ambient sound analyzer 20 is high (indicating noise with predominantly high-frequency components), the low frequency oscillator 41 is selected. The multiplexor 45 routes the selected signal to a power amplifier stage 46, which generates a driving signal 40A at the selected frequency for driving the speaker 52. Optionally, suitable harmonics may be included in the driving signal 40A to produce an alert signal that sounds pleasing to the human ear.

The amplitude of the driving signal 40A is controlled by the volume control signal 20A generated by the ambient sound analyzer 20. The alert signal generator 40 preferably increases the volume of the alert signal when the volume control signal 20A is large (indicating a high noise environment) and decreases the volume when the volume control signal 20A is small (indicating a low noise environment). This type of volume control may be implemented, for example, by using the analog volume control signal 20A to control a gain in the power amplifier 46.

When other types of ambient sound analyzers are used, appropriate modifications to this alert signal generator 40 will be required, as will be appreciated by those skilled in the art. For example, if an analog signal or multi-bit digital signal is used as the tone control signal 20B, the tone control signal 20B may be used to control a voltage-controlled oscillator.

FIG. 5 is a variation on the FIG. 1 embodiment in which a single transducer 550 replaces both the speaker 52 and the microphone 51 of the FIG. 1 embodiment. When the alert signal generator 540 is not generating a drive signal, the transducer 550 operates as a microphone, and provides input signals to the ambient sound analyzer 520. When the alert signal generator generates a drive signal, the transducer 550 operates as a speaker, and generates sound in accordance with the drive signal. Preferably, when the alert signal generator 540 is generating drive signals, the ambient sound analyzer 520 is configured to ignore its input so as not to interpret the drive signals as ambient sound. This type of operation may be accomplished, for example, by sending an inhibit signal to the ambient sound analyzer 520 each time an the alert signal generator 540 generates an alert signal, or by including appropriate switching so that drive signals generated by the alert signal generator 540 do not arrive at the ambient sound analyzer 520, or in any other appropriate manner.

Numerous optional features may be incorporated into the above-described embodiments. For example, the frequency response characteristics of the human ear may be taken into account when implementing frequency and tone controls (e.g., by treating noise in frequency bands where the ear is most sensitive as being louder than noise in other frequency bands). In another variation, instead of implementing both volume control and tone control as described above, only a single one of those parameters may be controlled. In yet another variation, instead of or in addition to tone adjustments, different sequences of sounds may be produced in response to different ambient environments (e.g., a siren in one ambient noise environment, and a series of three consecutive beeps in a different ambient noise environment). In still another variation, sounds with different qualities may be produced in response to different ambient environments (e.g., a trumpet sound or a bell sound may be selected). Numerous additional and alternative options can be readily envisioned and/or will be apparent to those skilled in the art.

By tailoring the characteristics of the alert signals to the ambient noise, the above-described data reader embodiments advantageously generate alert signals that can be easily heard in a wide variety of environments.

While the present invention has been explained in the context of the preferred embodiments, it is to be understood that various changes may be made to those embodiments, and various equivalents may be substituted, without departing from the spirit or scope of the invention, as will be apparent to persons skilled in the relevant arts.

## Claims

1. A method of generating an audible alert signal for a data reading device, the method comprising the steps of:
generating a read acknowledgement signal;
determining a characteristic of ambient sound; and
generating, in response to the read acknowledgement signal, an audible alert signal having an audio characteristic that is based on the characteristic of ambient sound determined in the determining step.

2. The method of claim 1, wherein in the step of generating the read acknowledgement signal, the read acknowledgement signal is generated in response to a successful reading and decoding of a barcode.

3. The method of claim 1, wherein the determining step comprises the step of determining a volume of the ambient sound, and wherein, in the generating step, a volume of the audible alert signal is based on the volume determined in the determining step.

4. The method of claim 1, wherein the determining step comprises the step of determining a volume of the ambient sound, and the generating step comprises the steps of generating an audible alert signal at a first volume when the volume of the ambient sound is high, and generating an audible alert signal at a second volume that is lower than the first volume when the volume of the ambient sound is low.

5. The method of claim 1, wherein the determining step comprises the step of determining a frequency characteristic of the ambient sound, and wherein, in the generating step, a tone of the audible alert signal is based on the frequency characteristic determined in the determining step.

6. The method of claim 5, wherein the determining step comprises the step of determining a volume of the ambient sound, and wherein, in the generating step, a volume of the audible alert signal is based on the volume determined in the determining step.

7. The method of claim 1, wherein the determining step comprises the step of determining frequency characteristics of the ambient sound and locating a frequency band having relatively low volume, and wherein, in the generating step, the audible alert signal is generated at a frequency within the located frequency band.

8. The method of claim 7, wherein the determining step comprises the step of determining a volume of the ambient sound in the frequency band, and the generating step comprises the steps of generating an audible alert signal at a first volume when the volume of the ambient sound in the frequency band is high, and generating an audible alert signal at a second volume that is lower than the first volume when the volume of the ambient sound in the frequency band is low.

9. The method of claim 7, wherein the determining step comprises the step of determining a volume of the ambient sound, and the generating step comprises the steps of generating an audible alert signal at a first volume when the volume of the ambient sound is high, and generating an audible alert signal at a second volume that is lower than the first volume when the volume of the ambient sound is low.

10. The method of claim 1, wherein, in the step of generating the audible alert signal, a characteristic of the audible alert signal is selected so as to be easily heard in the presence of ambient sound having the characteristic determined in the determining step.

11. The method of claim 10, wherein, in the step of generating the audible alert signal, a volume of the audible alert signal in a selected frequency band is at least as large as a volume of the ambient sound in the selected frequency band.

12. An apparatus for reading data and generating an audible alert signal, the apparatus comprising:
a data reader having a read acknowledgement output;
an audio monitoring device having an output signal;
an ambient sound analyzer connected to the output signal from the audio monitoring device, the ambient sound analyzer generating at least one control signal based on a characteristic of the output signal;
an audio output device; and
a signal generator that, in response to an assertion of the read acknowledgement output, generates a driving signal for the audio output device,
wherein at least one characteristic of the driving signal is controlled by at least one control signal generated by the ambient sound analyzer.

13. The apparatus of claim 12, wherein the data reader comprises at least one of a handheld flying spot barcode scanner, a fixed-mount flying spot barcode scanner, a handheld optical imaging barcode reader, a fixed-mount optical imaging barcode reader, and a handheld wand-type barcode reader, and wherein the data reader asserts the read acknowledgement output in response to a successful reading and decoding of a barcode.

14. The apparatus of claim 12, wherein a single transducer serves as both the audio output device and the audio monitoring device.

15. The apparatus of claim 12, wherein the audio output device comprises a speaker, and the audio monitoring device comprises a microphone that is distinct from the speaker.

16. The apparatus of claim 12, wherein the at least one control signal generated by the ambient sound analyzer is based on a volume of the ambient sound, and wherein an amplitude of the driving signal is controlled by the at least one control signal.

17. The apparatus of claim 12, wherein the at least one control signal generated by the ambient sound analyzer specifies a frequency band in which the ambient sound contains minimum power, and the driving signal causes the audio output device to produce a sound having a fundamental frequency in the specified frequency band.

18. The apparatus of claim 12, wherein the at least one control signal generated by the ambient sound analyzer specifies a frequency band in which the ambient sound contains minimum power, and the driving signal causes the audio output device to produce a sound containing a substantial amount of power in the specified frequency band.

19. The apparatus of claim 18, wherein the data reader comprises at least one of a handheld flying spot barcode scanner, a fixed-mount flying spot barcode scanner, a handheld optical imaging barcode reader, a fixed-mount optical imaging barcode reader, and a handheld wand-type barcode reader, and wherein the data reader asserts the read acknowledgement output in response to a successful reading and decoding of a barcode.

20. The apparatus of claim 19, wherein the at least one control signal generated by the ambient sound analyzer is based on a volume of the ambient sound in the specified frequency band, and wherein an amplitude of the driving signal is controlled by the at least one control signal.

21. The apparatus of claim 19, wherein the at least one control signal generated by the ambient sound analyzer is based on a volume of the ambient sound, and wherein an amplitude of the driving signal is controlled by the at least one control signal.

22. The apparatus of claim 12, wherein the characteristic of the driving signal is selected so as to be easily heard in the presence of ambient sound having a characteristic that matches the output signal.

23. The apparatus of claim 22, wherein a volume of an audio signal generated by the audio output device in a selected frequency band is at least as large as a volume of the ambient sound in the selected frequency band.
